# EUROPEAN PATENT APPLICATION

(11) **EP 4 062 753 A1**
(43) Date of publication of application: **28.09.2022**
(21) Application number: 22162476.0
(22) Date of filing: 16.03.2022
(51) Int. Cl.: A01G 20/20, E01C 13/08, A01G 24/22

(54) **ARTIFICIAL COMPOSITE SUBSTRATE FOR MANUFACTURING HYBRID GRASS TURF FOR SPORTS FACILITIES, RECREATIONAL AREAS OR GARDENS, PROCESS FOR MANUFACTURING HYBRID GRASS TURF AND HYBRID GRASS TURF THUS MANUFACTURED**

(30) Priority: 23.03.2021 IT 202100007019
(71) Applicant: Safitex Turf S.r.l., 24024 Gandino (BG) (IT)
(72) Inventor: SALVATONI, Corrado, 24026 Cazzano S. Andrea (BG) (IT)
(74) Representative: PGA S.p.A.

(57) **Abstract**

Artificial composite substrate for the creation of hybrid grass turf for sports facilities, recreational areas or gardens, a process for the creation of hybrid grass turf and hybrid grass turf in which an artificial substrate consisting of a primary vegetal base structure has a plurality of yarns, that are also vegetal, permanently bound to it. Natural grass is placed on the substrate, suitably associated with granular material, to grow in such a way that the roots are suitably bound to the filaments, the primary structure and finally to the laying soil.

## Description

### BACKGROUND OF THE INVENTION

The present invention relates to manufacturing new grass turf for sports facilities, recreational areas or gardens, and to specific procedures and techniques for manufacturing such grass turf.

More specifically, the present invention is directed to the creation of natural grass turf, of the so-called hybrid type, by using an artificial substrate, although entirely made up by natural components, to promote the seeding of the grass, its spontaneous growth, anchoring to the substrate and therefore its cultivation and maintenance during its lifespan.

### STATE OF THE ART

Entirely synthetic grass carpets are known, as well as hybrid systems using artificial substrates containing synthetic elements on which natural grass is planted by means of grassing processes (seeding and cultivation).

In the context of the present discussion, the artificial substrate is understood to be all those layers and/or layered structures that constitute the supports for the planting of natural grass, or provide the support for fastening synthetic turf filaments on them.

In the artificial substrates known to date and used in the production of hybrid turf, there is always a significant proportion of synthetic components, sometimes with the production entirely realized with synthetic material.

The great development of synthetic turf or hybrid systems on fields or open-air areas is due to the undeniable advantages of low maintenance of the synthetic elements of these type of turf, in addition to the fact that the synthetic elements of these turfs are resistant to atmospheric agents, have a longer lifespan than natural grass alone, allow performance levels appropriate to the sports and uses practiced on them, while optimizing the maintenance of natural grass.

Nevertheless, these systems for sports and recreational facilities, regardless the technical characteristics of manufacturing and resistance of the materials with which they are made, are subject to wear and tear, and have significant disadvantages due mainly to the deterioration of the layers by which they are composed, up to the decomposition and/or loss of material due to the friction caused on them by treading, physical and sports activities and/or the passage of operating machinery.

The deterioration of the synthetic elements or layers of these carpets has been noted to give rise to micro plastics of varying nature depending on the layer of origin and the material. In other words, the wear of the hybrid carpet leads to a disaggregation between the natural and synthetic components that together constituted the initial hybrid carpet. The disaggregation precedes the pulverization process of the synthetic filament which, often detached from the primary fabric due to the high stress of use, breaks down into smaller and smaller filaments until it becomes dust and micro-dust.

These micro plastics inevitably, either directly or indirectly, e.g. through the drainage channels of sports fields or recreational areas, end up invading the land underneath the facilities, watercourses or neighboring reservoirs, contributing to undesirable levels of pollution.

In essence, the systems known to date are still a source of pollution and a source of considerable removal costs when exhausted plants or carpets have to be removed from the land on which they were laid. The hybrid turf used to date represent a potential hazard if not disposed of properly. The combination of the natural and the synthetic fractions can be separated for proper and sustainable recycling, but only at great expense and only through the use of complex separating machinery (generally considered as emitters of significant amounts of C0₂).

Therefore, at present, in addition to the undeniable economic and performance advantages of synthetic and/or hybrid grass carpets, there is a need to solve the problems caused by pollution by guaranteeing the installation and operation of hybrid grass carpets while maintaining performance levels in compliance with the regulations relating to the activities for which they are intended, at the same time cutting the costs and precautions associated with their removal, disposal and replacement.

### PURPOSES OF THE INVENTION

The main purpose of the present invention is to manufacture an artificial composite substrate for the creation of hybrid grass turf, as well as the hybrid grass turf thus made, which, due to the very nature of their elements, totally avoid the formation of micro plastics and offer resistance, durability and performance comparable to synthetic materials.

Another aim of the present invention is to create a hybrid grass turf consisting only of natural and/or biodegradable elements and materials.

Yet another purpose, according to the present invention, is to enable performance levels of the final grass turf that comply with the regulations for the sports and/or recreational activities envisaged for it.

A further object of the present invention is to be able to remove grass turf, together with artificial composite substrates according to the invention, or possibly portions thereof, at the end of their lifespan, without having to resort to complex and costly removal operations, i.e. by shredding them, leaving the resulting material to decompose in situ, or simply by sending it to landfill without any additional protective precautions.

Still another purpose of the present invention is to make an artificial composite substrate capable of promoting grassing and increasing the anchoring and root holding properties of natural grass.

Last but not least, the aim of the present invention is to create an artificial composite substrate capable of guaranteeing the creation of hybrid s made entirely with natural plant components, also drastically reducing the quantities of fertilizers and additives usually used to promote natural grassing and the quality of the same (compared to the quantities and types necessary in the case of root systems in contact with artificial components).

### SUMMARY AND ASPECTS OF THE INVENTION

One or more of the foregoing purposes are achieved by specific aspects which are apparent from the preferred, but not limiting, embodiments of the present invention, said purposes being in accordance with one or more of the appended claims which are intelligible by means of the appended drawings and the following detailed description.

In a first aspect of the present invention, there is provided a composite artificial substrate essentially comprising a primary base structure to which is stably bound a plurality of spaced yarns, said yarns having free ends oriented in accordance with each other and protruding from only one side of said primary structure, said primary base structure and said yarns defining a mesh system, further according to the first aspect, said primary base structure is made of at least one layer of web made of vegetal material canvas, and said yarns are twisted yarns made of vegetal interlaced fibers, said yarns being stably bound by weaving with said primary base structure.

A second aspect of the invention in accordance with the first aspect provides that said twisted yarns are preferably made of short, twisted, spaced and interlaced fibers of coconut and/or hemp and/or jute.

A third aspect of the invention in accordance with the first aspect provides that said primary base structure is made by a plurality of layers of vegetal material canvas.

A fourth aspect of the invention in accordance with the first aspect provides that said primary base structure is preferably made by at least one layer of jute and/or hemp canvas.

A fifth aspect of the invention in accordance with the first aspect, provides that said primary base structure is preferably made with a plurality of layers of jute and/or hemp canvas mutually joined.

A sixth aspect in accordance with the preceding one, said plurality of jute and/or hemp canvas layers are joined together by a system of permanent stitching with vegetable and/or natural and/or biodegradable threads.

A seventh aspect in accordance with the first and second aspects, provides that said twisted yarns protruding from only one side of said primary structure have a length between 10 mm and 90 mm.

An eight aspect in accordance with the first and second aspects, said twisted yarns protruding from one side of said primary structure have a diameter between 0,5 mm and mm.8

In a ninth aspect in accordance with any one of the preceding aspects, a reinforcing and adhesive layer is realized between said yarns and said primary structure by optionally and/or combined addition to the yarns and/or primary structure of hot-melt totally biodegradable polymers and/or bioplastics. Optionally, still in accordance with this aspect, the reinforcing layer between the substrate and the twisted yarns is made with a reinforcing layer by melting and/or heating totally biodegradable polymers and/or bioplastics only on the side of the primary structure opposite to the side from which the twisted yarns protrude.

In an independent tenth aspect of the invention, a hybrid grass turf consisting of:
- a composite artificial substrate having a primary base structure to which are stably bound a plurality of spaced yarns, said yarns having free ends oriented in a concordant manner and protruding from only one side of said primary structure, said primary base structure and said yarns defining a mesh system, said primary base structure being made of at least one layer of vegetal material canvas, and said yarns being twisted yarns constituted of vegetal material with interlaced fibers, said twisted yarns being stably bound by weaving with said primary base structure,

- a natural, granular culture material having a height of between 50% and 100% of the length of said yarns of said substrate, and
- a layer or sod of pre-cultivated natural grass with roots, these roots facing that side of the substrate having protruding yarns,
- said layer or sod of pre-cultivated natural grass layer with roots, said composite artificial substrate having a primary structure and protruding yarns, and said natural growing material being associated and anchored to each other by a relationship of contact and interpenetration and passage produced by natural growth of said roots through said natural growing layer, said twisted yarns and said primary base structure.

An eleventh aspect in accordance with the previous aspect provides that said twisted yarns are short, twisted, interlaced and spaced coconut fibers.

In a twelfth aspect of the invention in accordance with the tenth aspect, it is provided that said primary base structure is made by a plurality of canvas layers made of vegetal material.

In a thirtinth aspect of the invention in accordance with the 10th aspect, it is provided that said primary base structure is made from at least one layer of jute canvas.

In a forteenth aspect of the invention in accordance with the tenth aspect, it is provided that said primary base structure is made from a plurality of layers of jute canvas joined with each other.

In a fifteenth aspect in agreement with the previous one, said plurality of layers of jute canvas are joined together by a system of permanent stitching with vegetable and/or natural and/or biodegradable threads.

In a sixteenth aspect in accordance with the tenth and eleventh aspects, said twisted yarns protruding from one side of said primary structure have a length between 10 mm and 90 mm.

In a seventeenth aspect in accordance with the tenth and eleventh aspects, said twisted filaments protruding from one side of said primary structure have a diameter of between 0.5 mm and 8 mm.

An eighteen aspect in accordance with the tenth aspect the natural culture material is a natural and permeable granular material.

In a nineteenth, aspect of the invention, in accordance with one or more of aspects from the tenth to the eighteenth, on said primary structure, on the side opposite to that from which the twisted yarns protrude, a reinforcing layer is made by melting and/or heating totally biodegradable polymers and/or bioplastics.

In an independent twentieth aspect of the invention, a hybrid grass turf consisting of:
- a composite artificial substrate having a primary base structure to which are stably bound a plurality of spaced yarns, said yarns having free ends oriented in a concordant manner and protruding from only one side of said primary structure, said primary base structure and said yarns defining a mesh system, said primary base structure being made of at least one layer of canvas made of vegetal material, and said yarns being twisted yarns made of interlaced vegetal material, said yarns being stably bound by weaving with said primary base structure,
- a natural, granular culture material having a height of between 50% and 100% of the length of said filaments of said substrate, and
- a seeding layer of natural grass, capable of producing the natural growth of the roots within said natural growing material and the passage and interpenetration of the roots through the yarns of the artificial substrate and through the mesh system defined by said yarns and said primary base structure, said artificial substrate constituting as a whole a layer of culture, support and anchoring for said naturally growing grass roots.

In a twenty first aspect of the invention in accordance with the preceding aspect, it is provided that said twisted yarns are short, twisted and spaced coconut fibers.

In a twenty second aspect of the invention in accordance with the 20th aspect, it is provided that said primary base structure is made by a plurality of layers of vegetal canvas.

In a twenty third aspect of the invention in accordance with the 20th aspect, it is provided that said primary base structure is made by at least one layer of jute canvas.

In a twenty fourth aspect of the invention in accordance with the 20th aspect, it is provided that said primary base structure is made by a plurality of layers of canvas jute cloth joined with each other.

In a twenty fifth aspect of the invention in accordance with the preceding one, said plurality of layers of canvas jute are joined together by means of a permanent stitching system with vegetal and/or natural and/or biodegradable threads.

In a twenty sixth aspect of the invention in accordance with the twentieth and twenty-first aspects, said twisted yarns protruding from only one side of said primary structure have a length of between 10 mm and 90 mm.

In a twenty seventh aspect of the invention in accordance with the twentieth and twenty-first aspects, said twisted yarns protruding from only one side of said primary structure have a diameter between 0.5 mm and 8 mm.

A twenty eight aspect according to the invention, in accordance with the 20th aspect the natural growing material is a natural, permeable granular material.

In a twenty ninth aspect of the invention, in accordance with one or more of the 20th to the 28th aspects, a reinforcement layer is made on said primary structure, on the side opposite to that from which the twisted yarns protrude, by melting and/or heating totally biodegradable polymers and/or bioplastics.

An independent thirtieth aspect of the present invention relates to a method for manufacturing a hybrid grass turf comprising the steps of:
- Making an artificial substrate comprising a basic primary structure to which are stably bound a plurality of spaced apart yarns, said yarns having free ends oriented in a concordant manner and protruding from only one side of said primary structure, said basic primary structure and said yarns defining a mesh system, said primary base structure being made of at least one layer of web constituted of vegetal material, and said yarns being twisted yarns constituted of vegetal material with interlaced fibers, said yarns being stably bound by weaving with said primary base structure,
- Coupling to said artificial substrate a natural, granular and permeable culture material for a height of between 50% and 100% of the length of said yarns of said substrate,
- Coupling said artificial substrate and said natural growing material with a layer or sod of natural grass having roots in such a way that said natural growing roots attain the passage and interpenetration of said roots through the yarns of the artificial substrate and through the mesh system defined by said yarns and said primary base structure, said artificial substrate forming as a whole a layer of culture, support and anchoring in intimate mixture for said naturally growing grass roots.

A thirty first independent aspect of the present invention relates to a method for manufacturing a hybrid grass turf comprising the steps of:
- Making an artificial substrate comprising a basic primary structure to which are stably bound a plurality of spaced apart yarns, said yarns having free ends oriented in a concordant manner and protruding from only one side of said primary structure, said basic primary structure and said yarns defining a mesh system, said primary base structure being made of at least one layer of vegetable canvas, and said yarns being twisted yarns constituted of vegetal material with interlaced fibers, said yarns being stably bound by weaving with said primary base structure,
- Coupling to said artificial substrate a natural, granular and permeable culture material for a height of between 50% and 100% of the length of said yarns of said substrate,
- Combining said artificial substrate and said natural growing material with a layer of natural grass seeding, capable of producing the natural growth of roots within said natural growing material and the passage and interpenetration of said roots through the yarns of the artificial substrate and through the mesh system defined by said filaments and said primary base structure, said artificial substrate forming as whole a growing layer, support and anchoring for said naturally growing grass roots.

Advantageously, the methods illustrated in aspects 30 and 31 above can also be obtained and implemented in accordance with the technical and constructional aspects and characteristics of both the artificial composite substrate (aspects 1-9) and the hybrid grass turf (aspects 10-19 and aspects 20-29) that are created with this composite substrate. The fact that both the substrate and the hybrid grass turf are made of completely natural and vegetal materials means that all synthetic materials and consequently all related pollution and/or disposal problems can be eliminated.

### BRIEF DESCRIPTION OF THE DRAWINGS

Preferred but non-limiting embodiments of the present invention are described in the attached drawings wherein:
Figure 1 is a cross-sectional view of an embodiment form of an artificial composite support substrate,

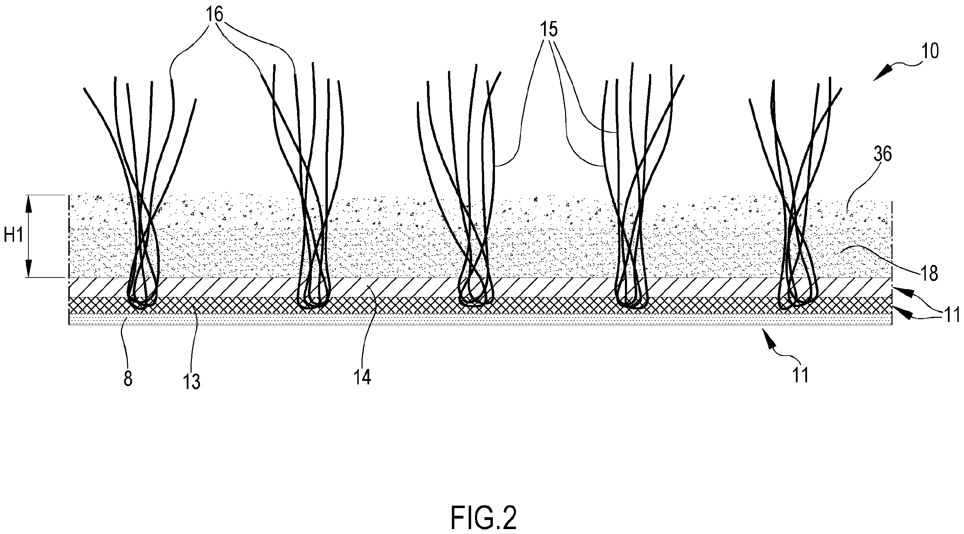

Fig. 2 reproduces the artificial composite substrate of Fig. 1 together with a culture layer of granular material,
Figure 3 is a sectional view of a hybrid grass turf according to some embodiments of the invention comprising the substrate of Fig. 1, and
Fig. 4 is an axonometric view of the layers and elements of figures 1 to 3 according to some embodiments of the invention.

### DETAILED DESCRIPTION OF THE INVENTION

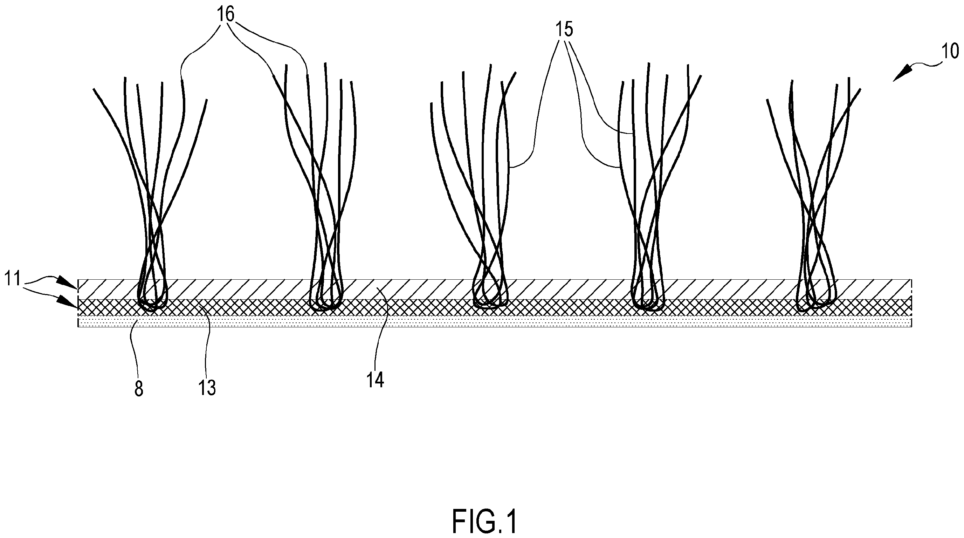

Some preferred embodiments of the present invention are now described in an illustrative and non-limiting manner, wherein with reference to figure 1, with 10 it has been indicated a composite artificial substrate constituted by a primary base structure 11 having the function of a support for realizing grass turf 30 shown in an illustrative manner in figure. In the embodiments of the invention, the artificial substrate 10 comprises one or more layers indicated in 13 and 14 in Figure 1 suitable of forming the primary base structure 11, said layers being made of exclusively vegetal material, in particular woven plant material, and preferably may be made, by way of example, of jute and/or hemp canvas, and/or any type of canvas made of vegetal fibers having sufficient rigidity and isotropic non-deformability of the primary base structure 11.

In the manufacturing of the primary base structure 11, whether it is formed of a single layer of web or of a plurality of layers such as those indicated in 13 and 14, at least one of said layers, in particular the upper layer (e.g. 14) must have a plurality of yarns 15 protruding from one side thereof and stably bound to it, for example by weaving.

The protruding yarns 15 are twisted yarns made of vegetal fibers, in particular and according to a preferred embodiment of the invention, they are made from woven short coconut fibers; optionally, the protruding yarns 15 may be made by jute fibers and/or hemp fibers; the twisted yarns are woven as creel yarns in ordinary textile looms, together with the warp and weft of a layer of the primary base structure 11. Optionally and conveniently, given the roughness, friction and strength characteristics of the vegetal fibers used both for warp and weft and for the creel yarns, devices for lubrication of the yarns and/or addition of enzymes to the yarns, can be provided on board the looms. It is thus possible to feed in the weaving yarns, substantially lubricated, in order to offer friction resistances compatible with their intrinsic characteristics of tensile strength avoiding breakage.

In the preparation of the primary base structure 11, as mentioned above, it is necessary that on at least one of its layers the yarns 15 are firmly fixed, once the mechanical bond is achieved the yarns 15 are adapted in length and/or cut in lengths in the range between 10 mm and 90 mm according to the intended use of the hybrid grass turf 30 and the technical performance required thereof.

In addition, according to the intended use for hybrid grass turf, the diameter of yarns 15 may vary between 0.5 mm and 10 mm, and preferably between 0.5 mm and 8 mm.

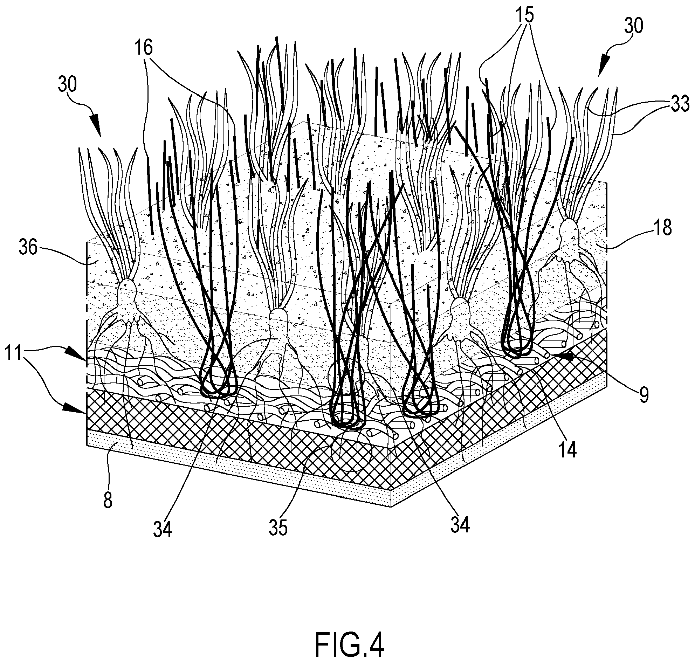

The stable mechanical union between yarns 15 and the primary base structure 11 achieves passage and anchoring of the growing root system through a mesh system shown overall in 9 and which is illustrated in greater detail in figure 4. This configuration also evidently allows root growth towards any laying ground 8.

To optionally reinforce the mechanical bond between the yarn 15 and the upper layer (for example 14), a reinforcement layer can be made on the side opposite to that from which the free ends 16 of the yarn 15 extend by melting and/or heating fully biodegradable polymers and/or bioplastics. Such reinforcement can be realized, for example, by spreading the biodegradable polymer or bioplastic on the layer opposite to that from which the filaments protrude, proceeding to a hot calendering operation or simply by heating with appropriate heat sources, for example infrared lamps, the biodegradable polymer sprinkled on that side of the primary base structure, which thus contributes to creating an additional bond to the mechanical weaving one.

Alternatively and/or additionally, the reinforcing layer may also comprise adhesive bonding between said yarns and said primary structure, by optional combined addition of and/or combination to the yarns and/or the primary structure on the side opposite to that from which the twisted filaments protrude, of a reinforcing layer made by melting and/or heating a totally biodegradable hot-melt polymers and/or bioplastics.

A composite artificial substrate with these characteristics is intended to advantageously replace all synthetic structures used to date for hybrid grass turf.

An artificial composite substrate 10 with a basic primary structure 11 is only defined as artificial in the present specification as a mechanical support and aid for the creation of natural grass turf.

The mechanical performance of the artificial composite substrate 10 considered as a whole, is determined by the stiffness of the canvas and yarns being used, as well as by the dimensions and length and diameter of the yarns, i.e. the size and number of layers of the primary base structure as well as the final size of the mesh system.

In order to create a hybrid grass turf according to the invention, it is used a substrate 10 on which a layer of granular and permeable growing material 18, generally selected from sand and/or natural soils, is spread.

The substrate 10 is spread or filled for a variable height H1 in relation to the protrusion length of its yarns 15, generally H1 included between 50% and 100% of the total length of the filaments considered from the upper surface of the primary structure 11 to the free end 16 of the yarns 15. It should be noted that the height H1 varies according to the type of granular material and the performance requirements of both the artificial substrate and the grass turf that is realized with it, in other words, the filling height H1 depends on the technical response and the use that will be made of the sports facilities, recreational areas or gardens obtained with these hybrid grass turfs. In addition, the height H1 can also be calculated, as shown in the figures, to include any seeding layer and the thickness it contribute to determine.

According to further embodiments, not shown, the height H1 of the granular material can also be greater than 100% of the height of the yarns 15 covering them completely.

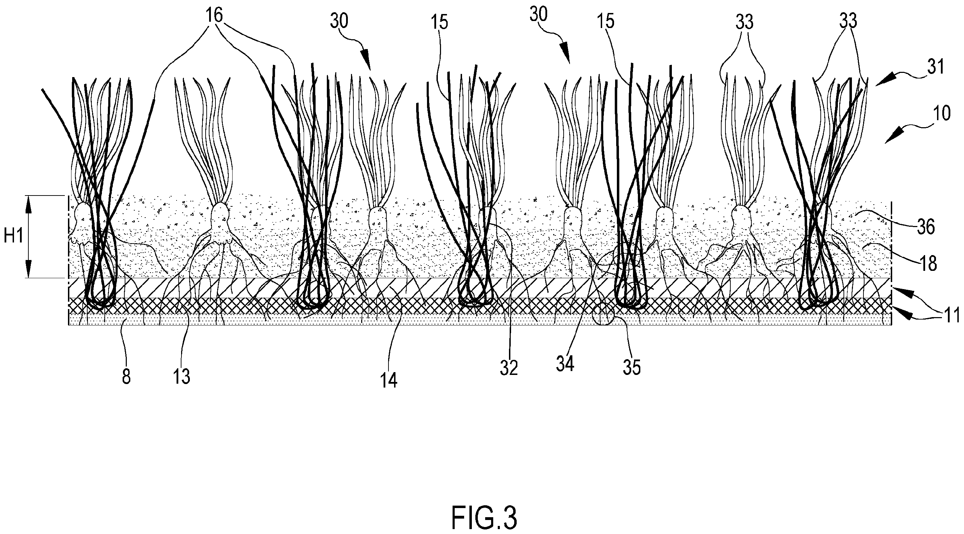

Coming now to the implementation of hybrid grass turf using a composite substrate according to the invention such as the ones herein described, it should be noted that essentially two techniques can be followed for their implementation, such techniques as we will see in the following descriptions are part of a single concept and inventive process and in this respect it is emphasized that the figure 3 alone, relating to a hybrid grass turf according to the invention, is sufficient to cover the detailed description of such implementation alternatives.

Schematically and by way of example, a first embodiment of a hybrid grass turf 30 according to the invention envisages combining a layer or sod of pre-cultivated natural grass indicated overall in 31 with a substrate indicated overall in 10 such as the one described above. The layer or sod of pre-cultivated natural grass 31 may come from a normal grass culture or specialized nursery, and is provided on its lower side with protruding roots, in natural growth, indicated by way of example in 32, while on the upper side it has (natural) grass blades indicated by way of example in 33.

The grass blades 33, in normal growth, may partly overhang the filaments 15 of the substrate 10 and will still be cultivated and cut according to specific needs.

By associating in a position of intimate contact, intuitively achievable for example by means of special machines, and in any case by laying on a portion of artificial substrate 10 a similar portion of layer or sod of pre-cultivated natural grass 31, the roots 32 of this grass layer will come into contact with the substrate on the side where the free ends 16 of the twisted yarns 15 protrude from it, which cross and emerge from the granular culture layer 18.

The grass blades 33 of the layer or sod of pre-cultivated natural grass 31 will consequently protrude towards the visible free surface.

In natural growth, the roots 32 will propagate within the artificial composite substrate, first coming into contact with and crossing the material of the natural growing layer 18, then the twisted yarns 15 made up of spaced vegetal fibers, in particular short coconut fibers, and finally the base mesh system 9, to finally become embedded in the laying ground 8. Thus, by exploiting the natural growth properties of the roots, as evidenced and indicated in Figures 3 and 4, it is possible to obtain from the structure of the composite substrate two further mechanical links, the first one indicated in 34 between the roots 32 which pass through and bind with the spaced fibers of the yarns 15, and the second one indicated in 35 for the roots 32 which pass through and also bind with the underlying mesh system 9, a system defined in turn by the mechanical weaving link between the layer 14 and the yarn 15 similar to the previous one.

Finally, as it is evident from Figures 3 and 4, the roots 32 penetrate into the laying ground, completing the anchoring and mechanical resistance of the hybrid grass turf thus created. It is therefore evident that the mechanical bonds 34 and 35, between naturally growing roots 32 and twisted filaments 15 made of twisted plant fibers, are of a very different nature and more resistant and solid than the simple passage of the roots around, but not through, the filaments of substrates made of synthetic materials, since by their very nature the synthetic filaments (of prior known realization) do not allow any crossing of them by the growing roots.

An alternative embodiment of a hybrid grass turf according to the invention using a composite substrate and always with reference to figure 3 involves placing or planting a substrate 10 (or portion thereof) like the one described above with the free ends 16 of its filaments 15 facing upwards (remembering that such substrates are generally laid on the ground).

After laying the substrate 10, will follow the creation or laying of a layer of natural growing material 18, the material being a granular material with a height H1 between 50% and 100% of the length of its yarns 15. Again, it should be noted that the height H1 varies according to the type of granular material and the performance requirements of both the artificial substrate and the grass turf that is created with it, in other words, the filling height H1 depends on the technical response and the use that will be made of the sports facilities, recreational areas or gardens created with these hybrid grass turf. In addition, the height H1 can also be calculated, as shown in the figures, to include any seeding layer and the thickness it determines.

According to further embodiments, not shown, the height H1 of the granular material can also be greater than 100% of the height of the filaments 15 covering them completely.

In a following step, a seeding layer of natural grass, indicated in 36 in figure 3, is made and/or laid either on top of, or in the layer of natural growing material previously made. The laying or execution of this seeding layer 36 can be considered either as an alternative form of implementation to the combination of a natural pre-cultivated grass layer with an artificial substrate 10 as described above, or as an addition.

The seeding layer 36, which can be made immediately above or also in interpenetration with the granular layer 18, will therefore produce the natural growth of the roots 32 with initial development of them within natural growing material 18, subsequently the roots 32, as they develop, will pass through the vegetal yarns 15 interpenetrating them. Continuing the growth, the roots 32 after binding to the vegetal yarns 15 reach, penetrate and pass through the mesh system 9 defined by the vegetal yarns 15 and at by the least one layer of the primary base structure 11, such as layer 14 (see Fig. 3 and 4).

Advantageously, the creation of a hybrid grass turf such as the one described exploits all the technical characteristics of substrate 10 as a growing, supporting and anchoring element for naturally growing grass roots.

Thus, by exploiting the natural growth properties of the roots, it is possible to obtain from the structure of the composite substrate 10 two further mechanical links, the first one indicated in 34 between the roots 32 which pass through and bind with the spaced fibers of the yarns 15, and the second one indicated in 35 for the roots 32 which pass through and also bind with the underlying mesh system 9, a system defined in turn by the mechanical weaving link between the layer 14 and the yarns 15 similar to the previous one.

Finally, the roots 32 penetrate into the soil and complete the anchoring and mechanical resistance of the hybrid grass turf.

Also with regard to the passage of the roots through the mesh system 9, since the latter are defined by the vegetal fibers of the layer 14 and by the yarns 15, which are also vegetal fibers and are bound to them and/or woven with them, the creation of mechanical anchoring bonds 34 of a very different nature and more resistant and solid than the simple passage of the roots around, but not through the filaments of substrates made of synthetic materials, since by their very nature these synthetic filaments (of prior known art) do not allow any crossing of them by the growing roots.

The realization of a hybrid grass turf 30 by exploiting the natural mechanical and constructive properties of its vegetal substrate 10, makes it possible at the end of the lifespan of the grass turf, in case of its total or partial replacement, to eliminate all the grass turf by natural vegetal decomposition either in situ or in a landfill. A grass turf according to the invention thus makes it possible to considerably reduce and simplify all disposal and/or replacement operations of it or parts thereof.

A hybrid grass turf 30 according to the invention has no synthetic plastic material among its components, and therefore cannot give rise to plastic waste, or be capable of generating polluting micro plastics.

Preferred but not exclusive method solutions for manufacturing a hybrid grass turf 30 according to the present invention are set out below.

In a first preferred solution, it is necessary, indicatively, to make an artificial substrate 10 provided with a base primary structure 11 to which a plurality of yarns 15 spaced apart from each other are stably bound. As mentioned above, the yarns have free ends 16 oriented in accordance and protruding from only one side of said primary structure, moreover the primary base structure and the yarns contribute to define a mesh system 9. It is understood that both the base structure 11 and the yarns 15 are made of vegetal material, and in particular the yarns 15 are twisted yarns made of twisted fiber vegetal material, woven with the base primary structure 11.

In a subsequent step, a natural, granular and permeable culture material 18 is associated with the substrate 10 and spread over it for a height between 50% and 100% of the length of the yarns 15 of the substrate 10. According to some alternative embodiments, the thickness of granular culture material 18 may be between 50% and 120% of the length of the yarns. These intervals and the thickness of the natural growing material are dictated by the expected performance of the final hybrid grass turf and the activities that will be carried out on it, whether these are purely sporting or simply recreational or decorative. Once the step of associating the granular culture material 18 to the artificial substrate 10 has been carried out and completed, a layer of natural grass 30 provided with roots 32 is coupled in a bonding union, so that the roots 32 in the natural growth realize the passage and diffusion through the granular culture layer 18 in order to reach and interpenetrate both the yarns 15 of the artificial substrate 10 and the mesh system 9 (defined by the yarns15 and the primary base structure 10). In other words, the artificial substrate 10 together with the granular culture layer 18 together constitute a culture layer, support and anchorage for the naturally growing roots 32.

An alternative method for creating a hybrid grass turf 30 according to the invention, provides that, once the phase of associating the granular growing material 18 to the artificial substrate 10 has been performed and completed, a seeding layer 36 of natural grass is placed on this structure, which can be defined as a whole as a support structure, in order to produce the natural growth of the roots 32.

The roots 32 in natural growth attain, also in this case, the passage and diffusion through the granular culture layer 18 to reach and interpenetrate both the yarns 15 of the artificial substrate 10 and the mesh system 9 (defined by the yarns and the primary base structure 10). In other words, the artificial substrate 10 together with its granular culture layer 18 constitutes overall a culture layer, support and anchorage for the naturally growing roots 32.

Both methods of creating hybrid grass turf 30 can be carried out in combination, i.e. using a substrate 10, realizing a cultivation layer with granular material 18 and then laying both a pre-cultivated grass turf 31 and a seeding layer 36.

## Claims

1. Composite artificial substrate essentially comprising a primary base structure to which is bound a plurality of spaced yarns, said yarns having free ends which are oriented in accordance with each other and protruding from only one side of said primary structure, said primary base structure and said yarns defining a mesh system,
**characterized in that**
- said primary base structure is made of at least one layer of vegetal material canvas, and
- said yarns are twisted yarns made of vegetal material interlaced fibers, said yarns being stably bound by means of weaving with said primary base structure.

2. Composite artificial substrate according to claim 1, **characterized in that** said twisted yarns are made of coconut and/or hemp and/or jute fibers, said fibers being short, twisted and spaced.

3. Composite artificial substrate according to claim 1, **characterized in that** said primary base structure is made by plurality of layers of vegetal material canvas.

4. Composite artificial substrate according to claim 1, **characterized in that** said primary base structure is made from at least one layer of jute and/or hemp canvas.

5. Composite artificial substrate according to claim 1 or 2, **characterized in that** said twisted yarns protruding from only one side of said primary structure have a length of between 10 mm and 90 mm.

6. Composite artificial substrate according to claim 1 or 2, **characterized in that** said twisted yarns protruding from only one side of said primary structure have a diameter between 0.5 mm and 8 mm.

7. Composite artificial substrate according to any one of the preceding claims, **characterized in that** on said primary structure, on the side opposite to that from which said twisted yarns protrude, a reinforcing layer is made by way of melting and/or heating a totally biodegradable polymer and/or bioplastic.

8. Hybrid grass turf consisting of:
- a composite artificial substrate having a primary base structure to which are stably bound a plurality of spaced apart yarns, said yarns having free ends oriented in accordance with each other and projecting from only one side of said primary structure, said primary base structure and said yarns defining a mesh system, said primary base structure being made of at least one layer of vegetal material canvas, and said yarns being twisted yarns constituted of vegetal material with interlaced fibers, said yarns being stably bound by weaving with said primary base structure,
- a natural, granular culture material having a height between 50% and 100% of the length of said yarns of said substrate, and
- a layer or sod of pre-cultivated natural grass with roots, said roots facing that side of the substrate having protruding yarns,
- said layer or sod of pre-cultivated natural grass with roots, said composite artificial substrate having a primary structure and protruding yarns, and said natural growing material being associated and anchored to each other by a relationship of contact, interpenetration and passage produced by natural growth of said roots through said natural growing layer, said twisted yarns and said primary base structure.

9. Hybrid grass turf according to claim 8, **characterized in that** said twisted yarns comprise short, interlaced and spaced coconut fibers.

10. Hybrid grass turf according to claim 8, **characterized in that** said primary base structure is made by at least one layer of jute canvas.

11. Hybrid grass turf according to claim 8, **characterized in that** on said primary structure, on the side opposite to that from which the twisted yarns protrude, a reinforcement layer is made by melting and/or heating a totally biodegradable polymer and/or bioplastic.

12. Hybrid grass turf consisting of:
- a composite artificial substrate having a primary base structure to which are stably bound a plurality of spaced apart yarns, said yarns having free ends oriented in accordance with each other and projecting from only one side of said primary structure, said primary base structure and said yarns defining a mesh system, said primary base structure being made of at least one canvas layer constituted of vegetal material, and said yarns being twisted yarns constituted of vegetal material with interlaced fibers, said yarns being stably bound by weaving with said primary base structure,
- a natural, granular culture material for a height of between 50% and 100% of the length of said yarns of said substrate, and
- a seeding layer of natural grass, capable of producing the natural growth of roots within said natural growing material and the passage and interpenetration of the same through the yarns of the artificial substrate and through the mesh system defined by said yarns and said primary base structure, said artificial substrate forming as a whole a layer of culture, support and anchoring for said naturally growing grass roots.

13. Hybrid grass turf according to claim 12, **characterized in that** said twisted yarns comprise short, interlaced and spaced coconut fibers.

14. Hybrid grass turf according to claim 12, **characterized in that** said primary base structure is made by at least one layer of jute canvas.

15. Method for making a hybrid grass turf including the steps of:
- Making an artificial substrate comprising a primary base structure to which are stably bound a plurality of spaced apart yarns, said yarns having free ends oriented in a concordant manner and protruding from only one side of said primary structure, said primary base structure and said yarns defining a mesh system, said primary base structure being made of at least one web layer constituted of vegetal material, and said yarns being twisted yarns constituted of vegetal material with interlaced fibers, said yarns being stably bound by weaving with said primary base structure,
- Coupling to said artificial substrate a natural, granular and permeable culture material for a height of between 50% and 100% of the length of said yarns of said substrate,
- Coupling said artificial substrate and said natural growing material with a layer of natural grass seeding, capable of producing the natural growth of roots within said natural growing material and the passage and interpenetration of said roots through the yarns of the artificial substrate and through the mesh system defined by said yarns and said primary base structure, said artificial substrate forming as a whole a layer of culture, support and anchoring in intimate mixture for said naturally growing grass roots.
